# EUROPÄISCHE PATENTSCHRIFT

(11) **EP 0 514 741 B1**
(45) Veröffentlichungstag und Bekanntmachung des Hinweises auf die Patenterteilung: **27.03.1996**
(21) Anmeldenummer: 92107953.9
(22) Anmeldetag: 12.05.1992
(51) Int. Cl.: B03D 1/24, D21B 1/32

(54) **Flotationseinrichtung zur Störstoff-, insbesondere Druckfarbenentfernung aus Altpapiersuspensionen**
Flotation device for removing impurities, particularly printing inks from waste paper suspensions
Dispositif de flottation pour éliminer les impuretés, notamment les encres d'imprimerie de suspensions de vieux papiers

(30) Priorität: 24.05.1991 DE 4116916
(43) Veröffentlichungstag der Anmeldung: 25.11.1992
(73) Patentinhaber: Voith Sulzer Stoffaufbereitung GmbH, D-88191 Ravensburg (DE)
(72) Erfinder: Britz, Herbert, W-7980 Ravensburg Weissenau (DE); Linck, Erich, Dr., W-7987 Weingarten (DE); Selbherr, Anton, W-7944 Herbertingen 1 (DE)

(56) Entgegenhaltungen:
- EP-A- 0 227 895
- DE-A- 3 634 903
- DE-U- 9 007 266
- US-A- 2 883 169
- US-A- 4 186 094

## Beschreibung

Die Erfindung betrifft eine Flotationseinrichtung gemäß dem Oberbegriff des Anspruchs 1.

Derartige Flotationseinrichtungen dienen dazu, insbesondere bei der Altpapieraufbereitung hergestellte Faserstoffsuspensionen von Störstoffen und Druckfarbenpartikeln zu befreien. Dazu werden in bekannter Weise Luftblasen in die Suspension eingemischt, welche - zumeist zusammen mit Chemikalien - in der Flotationsstufe einen die Verunreinigungen enthaltenden Schaum bilden, welcher abgeleitet wird. Zur Erzeugung der Luftblasen und Vermischung mit der Suspension haben sich Stufendiffusoren bereits bewährt, da sie sowohl das Einsaugen von Luft als auch die Bildung und Verteilung von Luftblasen begünstigen.

Eine bekannte Flotationseinrichtung der genannten Art ist z.B. aus der deutschen Gebrauchsmusterschrift DE-U-90 07 266 entnehmbar.

Die US-A-2 883 169 zeigt eine Belüftungsvorrichtung, die in einen gefüllten Behälter eintaucht und nach dem Wasserstrahlradpumpen-Prinzip arbeitet. Diese an sich bekannte Technik ist zwar einfach im Aufbau, bringt aber nicht die Flotationsbedingungen, die bei der Störstoffentfernung aus Altpapiersuspensionen erforderlich sind. Insbesondere ist es schwierig, auf diese Weise Luftbläschen in der gewünschten Größe und Menge zu erzeugen.

In der DE-A-36 34 903 wird eine andere Flotationseinrichtung bekannt gemacht, die vorzugsweise senkrecht in die Suspension eintaucht. Dabei stehen Vereinfachungen beim Aufbau des Flotationsgefässes bzw. von Zu- und Ableitungen im Vordergrund. Die Vermischung von Luft und Flüssigkeit erfolgt ebenfalls nach dem Injektorprinzip.

Bei den bekannten Flotationsanlagen wird jedoch immer wieder festgestellt, daß nicht alle Störstoffpartikel durch Flotation ausgeschieden werden, die grundsätzlich zur Flotation geeignet wären. Insbesondere wurde festgestellt, daß der Korngrößenbereich der wirklich ausgeschiedenen Störstoffe schmaler ist als der Korngrößenbereich der in der Suspension vorhandenen Störstoffe.

Es ist Aufgabe der vorliegenden Erfindung, eine Flotationseinrichtung zu schaffen, die geeignet ist, einen möglichst breiten Korngrößenbereich der Störstoffe zu erfassen und auszuscheiden. Dies soll mit geringem Aufwand erfolgen können. Die Einrichtung soll kompakt und platzsparend aufgebaut sein.

Die gestellte Aufgabe wird durch die kennzeichnenden Merkmale des Anspruchs 1 vollkommen gelöst.

In den sich anschließenden Unteransprüchen sind besonders vorteilhafte Ausführungsformen beschrieben.

Mit Hilfe der erfindungsgemäßen Flotationseinrichtung ist es möglich, die Suspension in optimaler Weise mit Luftblasen zu vermischen, bevor sie in den Flotationsbehälter eingeleitet wird. Es kann durch den Stufendiffusor eine relativ große Luftmenge (Luftbeladung etwa 60% und mehr) in die Suspension eingemischt werden. Infolge der hydraulischen Verhältnisse im Stufendiffusor wird die eingezogene Luft in eine Vielzahl von Luftblasen verteilt und mit der Suspension gut vermischt. Das am Ende des Stufendiffusors sich anschließende Umlenkteil wirkt auf die belüftete Suspension zunächst als Prallmischer, was die Verteilung der Luftblasen weiter verbessert. Wesentlich ist auch, daß das Umlenkteil für die verschiedenen Strombahnen der Suspension unterschiedliche Strömungsgeschwindigkeiten bewirkt. Das rührt daher, daß die verschiedenen Anteile der Suspension zwischen dem Einlauf für das Umlenkteil und dem Einlauf für den Flotationsbehälter unterschiedliche Strömungswege zurücklegen bei zudem unterschiedlichen Querschnitten. Durch die besondere Gestaltung dieses Umlenkteiles wird eine homogene Zuströmung über einen Prallbereich in eine Abströmung mit einseitig bevorzugter Richtung erzeugt. Es entstehen, über den Strömungsquerschnitt kurz hinter der Prallmischzone gesehen, Bereiche mit unterschiedlichen Turbulenzgraden, was zu unterschiedlichen Luftblasengrößen führt. Damit ist in einer einzigen Flotationszelle die Anlagerung von kleinen und großen Druckfarbenpartikeln gewährleistet, da kleine Partikel möglichst mit kleinen Luftblasen und große Partikel möglichst mit großen Luftblasen zusammengebracht werden sollten. Gleichzeitig wird durch die intensive Mischung vor allem die Anlagerung der kleinen Druckfarbenpartikel an die Luftblasen ermöglicht.

Der stromab der Umlenkung folgende Mischungsdiffusor hat darüberhinaus den Vorteil, am Ende der Mischstrecke für eine gleichförmige, niedrige Eintrittsgeschwindigkeit in den Flotationsbehälter zu sorgen. Dabei geht der Turbulenzgrad kontinuierlich zurück, bleibt aber groß genug erhalten, um das Wiedervereinigen von Luftblasen zu vermeiden. Insgesamt wird durch diese Maßnahmen eine optimale Flotationswirkung in der Flotationseinrichtung ermöglicht.

Die Erfindung wird erläutert durch Zeichnungen, von denen zeigen:
- Fig. 1: schematisch angeordnet den Schnitt durch den Teil einer erfindungsgemäßen Flotationseinrichtung;
- Fig. 2: schematisch perspektivisch dargestellt einen zur Flotationseinrichtung gehörenden Stufendiffusor mit Umlenkteil;
- Fig. 3: schematisch Strömungsbahnen im Umlenkteil.

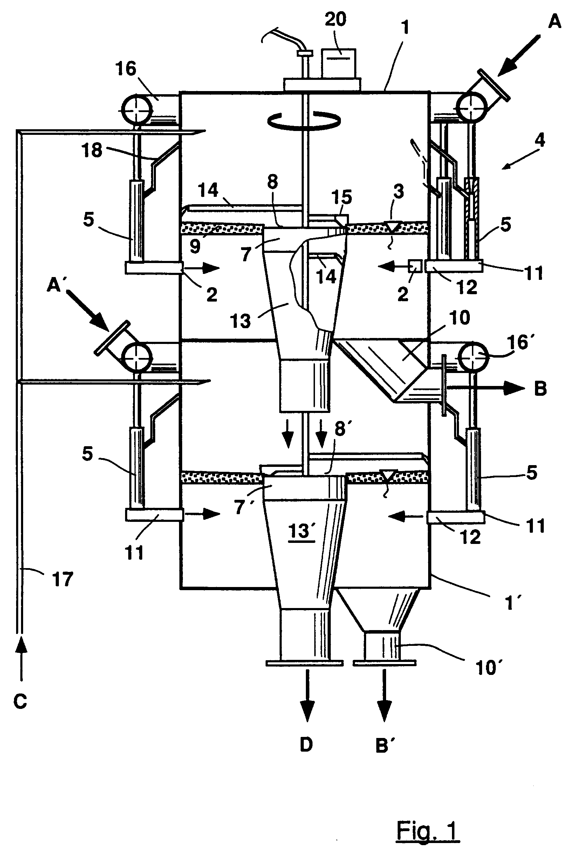

Fig. 1 zeigt schematisch dargestellt den Schnitt durch zwei übereinander stehende Flotationsbehälter1 und 1'. Die zu reinigende Suspension (Pfeil A, A') wird durch jeweils eine Ringleitung 16, 16' den Belüftungsvorrichtungen 4 zugeleitet, welche eine Mehrzahl von Stufendiffusoren 5 enthalten. Der Einfachheit halber sind nicht alle Stufendiffusoren dargestellt. Aus den Stufendiffusoren 5 gelangt die belüftete Suspension in die Umlenkteile 11, in welche am Ende die Mischungsdiffusoren 12 integriert sind und von dort durch Zuführungsöffnungen 2 in den jeweiligen Behälter 1 bzw. 1'.

Die in diesem Beispiel selbst ansaugende Belüftungsvorrichtung 4 erhält die benötigte Luft aus dem Raum innerhalb des Behälters 1 bzw. 1' oberhalb des Suspensionsniveaus 3. In den Fällen, wo die Behälter geschlossen sind, kann Flotationsluft über eine Leitung 17 angesaugt werden, die z.B. mit dem hier nicht gezeigten Schlammsammelbehälter verbunden sein kann. Ein großer Teil wird jedoch in der Regel aus der Luft stammen, die aus dem Flotationsschaum 9 im Behälter entweicht. Durch die Luftrückführung hat diese Ausführung nur eine äußerst geringe, unerwünschte Schwadenbildung für die Umgebung. Aus dem Raum oberhalb des Suspensionsniveaus gelangt die Luft über Leitungen 18 in die Lüftungseinrichtung 4. Der Gutstoff (Pfeil B bzw. B') wird in der Nähe des Behälterbodens abgeführt. Der über die Oberkante 8 der Stauvorrichtung 7 überlaufende Flotationsschlamm 9 gelangt über den Schlammtrichter 13 bzw. 13' aus dem Flotationsbehälter heraus (Pfeil D).

Die Fig. 1 enthält auch eine Darstellung der Wasserspritzrohre 14 und Reinigungselemente 15, durch welche ohne manuelle Arbeit die Betriebssicherheit der Einrichtung wesentlich verbessert werden kann. Wie hier gezeigt, werden Wasserspritzrohre und Reinigungselemente zweier Zellen von einem Motor 20 bewegt.

Fig. 2 zeigt eine perspektivische Skizze eines Stufendiffusors 5 mit sich anschließendem Umlenkteil 11. Am Stufendiffusor ist ferner ein Teil des Rohres 18 zur Belüftung sichtbar, das in der Nähe des Stufensprunges 6 mündet. Die Darstellung des Umlenkteils 11 verdeutlicht insbesondere die diffusorförmige Erweiterung des Mischungsdiffusors 12, wobei in diesem Falle eine Sprungkante 19 erkennbar ist, welche die Turbulenzwirkung weiter verbessert.

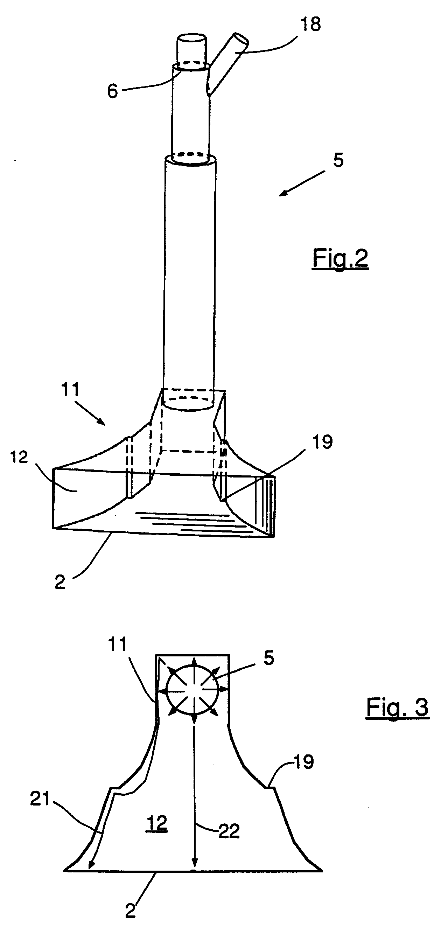

In Fig. 3 ist der Verlauf von Stromfäden im Umlenkteil 11 skizziert, dargestellt in der Blickrichtung, wie die Strömung aus einem Stufendiffusor 5 zugeführt wird. Man erkennt deutlich die unterschiedliche Länge zweier dargestellter Strombahnen, 21 und 22, in diesem Umlenkteil.

Es ist vorstellbar, daß die erfindungsgemäße Flotationseinrichtung auch bei nicht aus Altpapier erzeugten, verschmutzten Fasersuspensionen verwendbar ist, sofern die Art und Größe der Schmutzpartikel mit der der genannten Problemstellung vergleichbar sind und daher ausflotiert werden können.

## Patentansprüche

1. Flotationseinrichtung zur Störstoff- insbesondere Druckfarbenentfernung aus Altpapiersuspensionen, welche aus mindestens einem befüllbaren Behälter (1) besteht, der mit Zuführungsöffnungen (2) versehen ist, durch die die zu reinigende Suspension an Stellen, welche unterhalb des Suspensionsniveaus (3) im befüllten Behälter (1) liegen, vermischt mit Luftblasen, eingeführt wird, wobei die Belüftungseinrichtung (4) für die Suspension durch Stufendiffusoren (5) gebildet wird, in denen in der Nähe eines Stufensprunges (6) die Luft angesaugt oder eingepreßt werden kann, wobei, in Strömungsrichtung gesehen, dem Stufendiffusor (5) ein Umlenkungsteil (11) folgt, das eine im wesentlichen rechtwinkelige Umlenkung der Strömungsrichtung der mit Luftblasen vermischten Suspension herbeiführt und das als Prallmischer wirksam ist, wobei der Behälter (1) mit einer Stauvorrichtung (7) mit einer Oberkante (8) versehen ist, über die der Störstoffe enthaltende Flotationsschaum (9) entfernt werden kann und wobei unterhalb der Zuführungsöffnungen (2) für die zu reinigende Suspension im Behälter mindestens eine Gutstoffabführleitung (10) vorhanden ist, aus der die gereinigte Suspension aus dem Behälter (1) abgezogen werden kann,
**dadurch gekennzeichnet**,
daß das Umlenkungsteil (11) anschließend an die im wesentlichen rechtwinkelige Umlenkung einen Mischungsdiffusor (12) mit diffusorartig in einer bevorzugten Strömungsrichtung sich erweiterndem Strömungsquerschnitt enthält.

2. Flotationseinrichtung nach Anspruch 1,
**dadurch gekennzeichnet**,
daß der Mischdiffusor (12) sowohl stetig als auch unstetig sich erweiternde Strömungsquerschnitte aufweist.

3. Flotationseinrichtung nach Anspruch 1,
**dadurch gekennzeichnet**,
daß die in der Belüftungseinrichtung (4) vorhandenen Stufendiffusoren (5) einen Eingangsquerschnitt zwischen 300 mm² und 1000 mm² aufweisen.

4. Flotationseinrichtung nach Anspruch 1,
**dadurch gekennzeichnet**,
daß die in der Belüftungseinrichtung (4) vorhandenen Stufendiffusoren (5) zwei Stufensprünge haben, wobei die Luftzufuhr kurz hinter dem ersten Stufensprung (6) vorgesehen ist.

5. Flotationseinrichtung nach Anspruch 1,
**dadurch gekennzeichnet**,
daß der Behälter(1) im wesentlichen geschlossen ist und daß die Belüftungseinrichtung (4) aus dem im Behälter oberhalb des Suspensionsspiegels liegenden Raum mit Luft versorgt wird.

6. Flotationseinrichtung nach Anspruch 5,
**dadurch gekennzeichnet**,
daß der Behälter (1) im wesentlichen geschlossen ist und die Luft, die aus der im Behälter befindlichen Suspension sowie aus dem Flotationsschaum (9) innerhalb und/oder außerhalb des Behälters (1) austritt, so geführt wird, daß sie wiederum zur Belüftung der nachströmenden, zu reinigenden Suspension verwendbar ist.

7. Flotationseinrichtung nach Anspruch 1 oder 5,
**dadurch gekennzeichnet**,
daß die zur Belüftung verwendete Luft von dem Stufendiffusor (5) selbständig angesaugt werden kann.

8. Flotationseinrichtung nach Anspruch 1,
**dadurch gekennzeichnet**,
daß die Stufendiffusoren (5) vertikal außen neben der Seitenwand des Flotationsbehälters stehen und die Umlenkteile (11) eine im wesentlichen horizontale Suspensionseinführung bewirken.

9. Flotationseinrichtung nach Anspruch 1,
**dadurch gekennzeichnet**,
daß mindestens zwei Flotationsbehälter (1) übereinander angeordnet sind und daß der Flotationsschaum (9) des oben liegenden Behälters über die Oberkante (8) der Stauvorrichtung (7) in den Schaumtrichter (13) des oben liegenden Behälters und von dort in den Schaumtrichter (13') des darunter liegenden Behälters hineinfließen kann, wobei die gereinigten Gutstoffe (B, B') beider Behälter getrennt oder gemeinsam erfaßt werden können.

10. Flotationseinrichtung nach Anspruch 1,
**dadurch gekennzeichnet**,
daß ein bewegbares Wasserspritzrohr (14) innerhalb des Behälters vorhanden ist, welches die Behälterinnenwandung im Bereich der Schaumschicht oder den Schlammtrichter (13) durch Zugabe von Wasser periodisch oder kontinuierlich reinigen kann.

11. Flotationseinrichtung nach Anspruch 10,
**dadurch gekennzeichnet**,
daß die Behälterwand, bzw. der Schlammtrichter einen runden Grundriß hat und daß die Austrittsöffnung des Wasserspritzrohres (14) auf einer kreisförmigen Bahn bewegt werden kann.

12. Flotationseinrichtung nach Anspruch 1,
**dadurch gekennzeichnet**,
daß die Oberkante der Stauvorrichtung (7) einen runden Grundriß hat und daß der dort befindliche Schlammeinlauf durch ein auf kreisförmiger Bahn bewegbares Reinigungselement (15) gereinigt werden kann.

13. Flotationseinrichtung nach Anspruch 11 und 12,
**dadurch gekennzeichnet**,
daß Wasserspritzrohr (14) und Reinigungselement (15) gemeinsam bewegbar sind.

## Claims

1. A flotation apparatus for the removal of impurities, in particular printing inks, from waste paper suspensions, which consists of at least one fillable vessel (1) which is provided with feed orifices (2) through which the suspension which is to be cleaned is introduced, mixed with air bubbles, at points which are located below the level (3) of suspension in the filled vessel (1), the aeration means (4) for the suspension being formed by step diffusors (5) in which the air can be drawn in or injected in the vicinity of a step (6), with a deflection part (11) succeeding the step diffusor (5), viewed in the direction of flow, which part causes a substantially right-angled deflection of the direction of flow of the suspension mixed with air bubbles and which acts as an impact mixer, the vessel (1) being provided with a retaining device (7) with an upper edge (8) across which the flotation froth (9) containing the impurities can be removed, and at least one removal line (10) for accepted stock being provided in the vessel beneath the feed orifices (2) for the suspension to be cleaned, from which line the cleaned suspension can be withdrawn from the vessel (1),
characterised in that the deflection part (11) following the substantially right-angled deflection contains a mix diffusor (12) with a flow cross-section which widens in the manner of a diffusor in a preferred direction of flow.

2. A flotation apparatus according to Claim 1, characterised in that the mix diffusor (12) has flow cross-sections which widen both continuously and discontinuously.

3. A flotation apparatus according to Claim 1, characterised in that the step diffusors (5) present in the aeration means (4) have an entry cross-section of between 300 mm² and 1000 mm².

4. A flotation apparatus according to Claim 1, characterised in that the step diffusors (5) present in the aeration means (4) have two steps, with provision being made for the supply of air shortly after the first step (6).

5. A flotation apparatus according to Claim 1, characterised in that the vessel (1) is substantially closed and that the aeration means (4) is supplied with air from the space located in the vessel above the level of the suspension.

6. A flotation apparatus according to Claim 5, characterised in that the vessel (1) is substantially closed and the air which emerges from the suspension located in the vessel and from the flotation froth (9) inside and/or outside the vessel (1) is guided such that it can be re-used for aeration of the subsequent suspension which is to be cleaned.

7. A flotation apparatus according to Claim 1 or 5, characterised in that the air used for aeration can be drawn in independently by the step diffusor (5).

8. A flotation apparatus according to Claim 1, characterised in that the step diffusors (5) are located vertically on the outside next to the side wall of the flotation vessel and the deflection parts (11) effect a substantially horizontal introduction of suspension.

9. A flotation apparatus according to Claim 1, characterised in that at least two flotation vessels (1) are arranged one above the other and that the flotation froth (9) of the upper vessel can flow over the upper edge (8) of the retaining device (7) into the froth funnel (13) of the upper vessel and from there into the froth funnel (13') of the underlying vessel, with the cleaned accepted stock (B, B') of both vessels being able to be collected separately or jointly.

10. A flotation apparatus according to Claim 1, characterised in that a movable water spraying pipe (14) is provided within the vessel, which pipe can clean the inner walls of the vessel periodically or continuously in the region of the froth layer or the sludge funnel (13) by the addition of water.

11. A flotation apparatus according to Claim 10, characterised in that the vessel wall or the sludge funnel has a round outline and that the outlet orifice of the water spraying pipe (14) can be moved on a circular path.

12. A flotation apparatus according to Claim 1, characterised in that the upper edge of the retaining device (7) has a round outline and that the sludge inlet located there can be cleaned by a cleaning element (15) which can be moved on a circular path.

13. A flotation apparatus according to Claim 11 and 12, characterised in that the water spraying pipe (14) and the cleaning element (15) are jointly movable.

## Revendications

1. Dispositif de flottation pour l'élimination de substances gênantes, en particulier d'encres d'imprimerie, de suspension de vieux papiers, constitué d'au moins une cuve (1) remplissable pourvue d'ouvertures d'alimentation (2), par lesquelles la suspension à épurer est introduite, mélangée à des bulles d'air, en des points qui se situent au-dessous du niveau (3) de la suspension dans la cuve (1) remplie, le dispositif d'aération (4) pour la suspension étant formé par des diffuseurs à gradins (5), dans lesquels, à proximité d'un saut de gradin (6), l'air peut être aspiré ou pressé à l'intérieur, dans lequel le diffuseur à gradins (5) est suivi, vu dans le sens de l'écoulement, par un élément de déviation (11), qui provoque une déviation sensiblement à angle droit de la direction d'écoulement de la suspension mélangée à des bulles d'air et qui opère en tant que mélangeur à rebondissement, dans lequel la cuve (1) est pourvue d'un dispositif de retenue (7) avec un bord supérieur (8), par lequel la mousse de flottation (9) contenant les substances gênantes peut être éliminée et dans lequel, au-dessous des ouvertures d'alimentation (2) pour la suspension à épurer, il est prévu dans la cuve au moins une conduite d'évacuation de pâte épurée (10), par laquelle la suspension épurée peut être tirée de la cuve (1), caractérisé en ce que l'élément de déviation (11) contient, à la suite de la déviation sensiblement à angle droit, un diffuseur de mélange (12) avec section transversale d'écoulement en diffuseur, s'élargissant dans une direction d'écoulement préférée.

2. Dispositif de flottation selon la revendication 1, caractérisé en ce que le diffuseur de mélange (12) présente des sections transversales d'écoulement s'élargissant constamment ou non.

3. Dispositif de flottation selon la revendication 1, caractériséen ce que les diffuseurs à gradins (5), présents dans le dispositif d'aération (4), présentent une section transversale d'entré comprise entre 300 mm² et 1 000 mm².

4. Dispositif de flottation selon la revendication 1, caractérisé en ce que le diffuseur à gradins (5), présent dans le dispositif d'aération (4), possède deux sauts de gradin, l'arrivée d'air étant prévue juste derrière le premier saut de gradin.

5. Dispositif de flottation selon la revendication 1, caractérisé en ce que la cuve (1) est sensiblement fermée et en ce que le dispositif d'aération (4) est alimenté en air, à partir du volume situé dans la cuve, au-dessus du niveau de la suspension.

6. Dispositif de flottation selon la revendication 5 , caractérisé en ce que la cuve (1) est sensiblement fermée et l'air, qui sort de la suspension se trouvant dans la cuve ainsi que de la mousse de flottation (9) à l'intérieur et/ou à l'extérieur de la cuve (1), est guidé de manière à pouvoir être réutilisé pour l'aération de la suspension à épurer, arrivant ensuite.

7. Dispositif de flottation selon la revendication 1 ou 5, caractérisé en ce que l'air utilisé pour l'aération peut être aspiré indépendamment par le diffuseur à gradins (5),

8. Dispositif de flottation selon la revendication 1, caractérisé en ce que les diffuseurs à gradins (5) se trouvent verticalement à l'extérieur, à côté de la paroi latérale de la cuve de flottation et les éléments de déviation (11) opèrent une introduction de suspension sensiblement horizontale.

9. Dispositif de flottation selon la revendication 1, caractérisé en ce qu'au moins deux cuves de flottation (1) sont disposées l'une au-dessous de l'autre et en ce que la mousse de flottation (9) de la cuve située au-dessus peut s'écouler, par dessus le bord supérieur (8) du dispositif de retenue (7), dans la trémie à mousse (13) de la cuve situé au-dessus et de là, dans la trémie à mousse (13') de la cuve située au-dessous, les pâtes épurées (8, 8') des deux cuves pouvant être traitées séparément ou ensemble.

10. Dispositif de flottation selon la revendication 1, caractérisé en ce qu'à l'intérieur de la cuve se trouve un tube de pulvérisation d'eau (14) mobile, qui peut nettoyer, périodiquement ou en continu, la paroi intérieure de la cuve dans la zone de la couche de mousse ou la trémie des boues (13), par addition d'eau.

11. Dispositif de flottation selon la revendication 10, caractérisé en ce que la paroi de la cuve ou la trémie à boues présente un contour rond et en ce que l'ouverture de sortie du tube de pulvérisation d'eau (14) peut être déplacée sur une trajectoire circulaire.

12. Dispositif de flottation selon la revendication 1, caractérisé en ce que le bord supérieur du dispositif de retenue (7) présente un contour rond et en ce que l'entrée des boues qui se trouve à cet endroit peut être nettoyée par un élément de nettoyage (15) déplaçable sur une trajectoire circulaire.

13. Dispositif de flottation selon les revendications 11 et 12, caractérisé en ce que le tube de pulvérisation d'eau (14) et l'élément de nettoyage (15) sont déplaçables conjointement.
